# EUROPEAN PATENT APPLICATION

(11) **EP 4 819 309 A1**
(43) Date of publication of application: **07.10.2026**
(21) Application number: 23959883.2
(22) Date of filing: 30.11.2023
(51) Int. Cl.: H01M 50/102

(54) **ELECTROCHEMICAL APPARATUS AND ELECTRIC DEVICE**

(71) Applicant: Ningde Amperex Technology Limited, Ningde, Fujian 352100 (CN)
(72) Inventor: CHEN, Tengteng, Ningde, Fujian 352100 (CN); LI, Xun, Ningde, Fujian 352100 (CN); CHEN, Wen, Ningde, Fujian 352100 (CN); LAO, Shaojiang, Ningde, Fujian 352100 (CN)
(74) Representative: Kraus & Lederer PartGmbB
(86) International application number: PCT/CN2023/135623
(87) International publication number: WO 2025/111969

(57) **Abstract**

The present application discloses an electrochemical apparatus and an electric device. The electrochemical apparatus includes an electrode assembly and a housing, the housing includes a first side wall and a second side wall oppositely disposed along a first direction, the first direction is a thickness direction of the electrode assembly, and the electrode assembly is disposed between the first side wall and the second side wall. The first side wall includes a first outer surface and a first inner surface, the first outer surface is away from the electrode assembly relative to the first inner surface, the first outer surface has a first protrusion, a position of the first inner surface opposite to the first protrusion has a first recess, an orthographic projection of the first protrusion on a first plane is located in a first corner region of an orthographic projection of the first side wall on the first plane, and the first plane is perpendicular to the first direction. The electrochemical apparatus of the present application, by providing a protrusion in the corner region of the first side wall, can reduce the stress on the corners of the housing when the electrode assembly expands, thereby reducing the risk of damage and improving the reliability of the electrochemical apparatus during use.

## Description

### TECHNICAL FIELD

The present application relates to the technical field of battery, and in particular to an electrochemical apparatus and an electric device.

### BACKGROUND TECHNOLOGY

Electrochemical apparatuses are widely used in fields such as portable electronic devices, electric vehicles, electric tools, drones, and energy storage devices. As the energy density of electrochemical apparatuses increases and the diversity of application environments expands, higher requirements are imposed on the reliability of electrochemical apparatuses during use.

### SUMMARY OF THE INVENTION

In view of the above problems, the present application provides an electrochemical apparatus and an electric device, which can improve the reliability of the electrochemical apparatus during use.

According to a first aspect, the present application provides an electrochemical apparatus, where the electrochemical apparatus includes an electrode assembly and a housing, the housing includes a first side wall and a second side wall oppositely disposed along a first direction, the first direction is a thickness direction of the electrode assembly, and the electrode assembly is disposed between the first side wall and the second side wall. The first side wall includes a first outer surface and a first inner surface, the first outer surface is away from the electrode assembly relative to the first inner surface, the first outer surface has a first protrusion, a position of the first inner surface opposite to the first protrusion has a first recess, an orthographic projection of the first protrusion on a first plane is located in a first corner region of an orthographic projection of the first side wall on the first plane, and the first plane is perpendicular to the first direction.

In the electrochemical apparatus of the present application, by providing a protrusion in the corner region of the first side wall of the housing, it is less likely to hit the corner of the housing during the expansion process of the electrode assembly. At the same time, due to a height difference between the inner surface of the corner region of the first side wall and the inner surface of the main body region, when the electrode assembly expands, it preferentially contacts the main body region of the first side wall, so that the tensile force generated by the expansion of the electrode assembly mainly acts on the edge of the main body region, thereby alleviating the pulling on the corner of the housing, reducing the risk of damage to the corner of the housing, and improving the reliability of the electrochemical apparatus during use.

In any of the above optional embodiments, the first outer surface further has a first base surface, along the first direction, a height by which the first protrusion protrudes from the first base surface is t, the second side wall includes a second outer surface and a second inner surface, the second outer surface is away from the electrode assembly relative to the second inner surface, and a distance between the first base surface and the second outer surface is T, satisfying: 0.05T ≤ t ≤ 0.4T. In this way, while improving the reliability of the electrochemical apparatus during use, the electrochemical apparatus can also have a relatively high volumetric energy density.

In any of the above optional embodiments, along a second direction, the second direction is a length direction of the electrode assembly, a length of the first protrusion is l, and a length of the first side wall is L, satisfying: 0.05L ≤ l ≤ 0.4L. In this way, while improving the reliability of the electrochemical apparatus during use, the electrochemical apparatus can also have a relatively high volumetric energy density.

In any of the above optional embodiments, along a third direction, the third direction is a width direction of the electrode assembly, a width of the first protrusion is w, and a width of the first side wall is W, satisfying: 0.05W ≤ w ≤ 0.4W. In this way, while improving the reliability of the electrochemical apparatus during use, the electrochemical apparatus can also have a relatively high volumetric energy density.

In any of the above optional embodiments, when viewed along the first direction, the first side wall is L-shaped, and the first corner region is an inner corner region of the orthographic projection of the first side wall on the first plane. The inventors of the present application have found through research that for L-shaped electrochemical apparatuses, due to the special structure of their housing, the deformation at the inner corners of the housing is more severe during the expansion of the electrode assembly, and the risk of corner damage is higher. By providing a protrusion in the inner corner region of the first side wall, the risk of damage to the inner corner of the housing caused by the electrode assembly squeezing the inner corner of the housing during expansion can be significantly reduced, thereby improving the reliability of the electrochemical apparatus during use.

In any of the above optional embodiments, the first side wall includes a first short side extending along a second direction and a second short side extending along a third direction, the first short side and the second short side are connected to form an inner corner of the first side wall, a length of overlap between the first protrusion and the first short side is l₁, a length of overlap between the first protrusion and the second short side is l₂, and a length of the first short side is L₁, and a length of the second short side is L₂, satisfying at least one of the following conditions: (1) 0.05L₁ ≤ l₁ ≤ 0.5L₁; or (2) 0.05L₂ ≤ l₂ ≤ 0.5L₂. In this way, while improving the reliability of the electrochemical apparatus during use, the electrochemical apparatus can also have a relatively high volumetric energy density.

In any of the above optional embodiments, the first side wall further includes an arc-shaped chamfered edge located between the first short side and the second short side. In this way, the processing and manufacturing of the housing can be facilitated, and the reliability of connection at the inner corner of the housing can also be improved.

In any of the above optional embodiments, the first outer surface is provided with multiple first protrusions, and orthographic projections of the multiple first protrusions on the first plane are respectively located in multiple first corner regions of the orthographic projection of the first side wall on the first plane. In this way, the risk of damage to the corners of the housing caused by the electrode assembly squeezing the housing during expansion can be further reduced, and the reliability of the electrochemical apparatus during use can be improved.

In any of the above optional embodiments, when viewed along the first direction, the first protrusion is any one of quadrilateral, sector-shaped, L-shaped, or triangular.

In any of the above optional embodiments, the second side wall includes a second outer surface and a second inner surface, the second outer surface is away from the electrode assembly relative to the second inner surface, the second outer surface has a second protrusion, a position of the second inner surface opposite to the second protrusion has a second recess, and an orthographic projection of the second protrusion on the first plane is located in a second corner region of an orthographic projection of the second side wall on the first plane. In this way, the risk of damage to the corners of the housing caused by the electrode assembly squeezing the housing during expansion can be further reduced, and the reliability of the electrochemical apparatus during use can be improved.

According to a second aspect, the present application provides an electric device, including the electrochemical apparatus provided in the first aspect. Since the electrochemical apparatus provided in the first aspect has a relatively low risk of damage to the corners of the housing during use, the electric device including the above electrochemical apparatus has relatively high reliability during use.

### DESCRIPTION OF DRAWINGS

In order to more clearly illustrate the technical solutions of some embodiments of the present application, the drawings to be used in the description of these embodiments will be briefly described below. Obviously, the drawings described below are only some embodiments of the present application. For those skilled in the art, other drawings can also be obtained based on these drawings.
FIG. 1 is an isometric view of an electrochemical apparatus according to some embodiments of the present application;
FIG. 2 is a cross-sectional view of a partial structure of an electrochemical apparatus according to some embodiments of the present application;
FIG. 3 is a top view of an electrochemical apparatus according to some embodiments of the present application;
FIG. 4 is an isometric view of an electrochemical apparatus according to some other embodiments of the present application;
FIG. 5 is a top view of an electrochemical apparatus according to some other embodiments of the present application;
FIG. 6 is a cross-sectional view of a partial structure of an electrochemical apparatus according to some other embodiments of the present application;
FIG. 7 is a schematic structural diagram of an electrochemical apparatus according to some embodiments of the present application;
FIG. 8 is a schematic structural diagram of an electrochemical apparatus according to some other embodiments of the present application; and
FIG. 9 is a schematic structural diagram of an electrochemical apparatus according to still some other embodiments of the present application.

The reference numerals in the accompanying drawings are as follows: 100-electrochemical apparatus; 10-housing; 101-first side wall; 1011-first outer surface; 10111-first protrusion; 10112-first base surface; 10121-first recess; 1012-first inner surface; 1013-first short side; 1014-second short side; 1015-edge; 1016-first long side; 1017-fourth short side; 1018-second long side; 1019-third short side; 102-second side wall; 1021-second outer surface; 1022-second inner surface; 20-electrode assembly; 201-tab; 202-electrode sheet assembly; 200-first plane; 30-first packaging portion; 301-first peripheral wall; 302-first pit; 303-second pit; 40-second packaging portion; 10222-second protrusion; 10221-second recess; X-first direction; Y-second direction; and Z-third direction.

### DETAILED DESCRIPTION OF EMBODIMENTS

The technical solutions of the present application will be described in detail below in conjunction with the accompanying drawings and specific embodiments. Obviously, the following embodiments are only used to illustrate the technical solutions of the present application more clearly, and are not intended to limit the protection scope of the present application.

Unless otherwise defined, all technical and scientific terms used herein have the same meaning as commonly understood by one of ordinary skill in the art to which this application belongs. The terms used herein are for the purpose of describing specific embodiments only and are not intended to limit the present application. The terms "include" and "have" and any variations thereof in the description and claims of the present application are intended to cover non-exclusive inclusions.

In the description of the present application, the terms "first", "second", and the like are used only to distinguish different objects, and should not be construed as indicating or implying relative importance or implicitly indicating the number, specific order or primary-secondary relationship of the indicated technical features. In the description of the present application, the meaning of "multiple" is two or more unless specifically defined otherwise. Those skilled in the art can understand that the features described in some embodiments herein can be combined with other embodiments in any manner as long as there is no conflict.

In the description of the present application, the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on orientations or positional relationships shown in the drawings, which are merely for convenience of describing some embodiments of the present application and simplifying the description, and do not indicate or imply that the referred means or element must have a specific orientation, be constructed and operated in a specific orientation, and therefore should not be construed as limiting these embodiments of the present application.

In the description of the present application, unless otherwise specifically specified and limited, the terms "mounting", "join", "connecting", "fixing", and the like should be understood in a broad sense. For example, they can mean a fixed connection, a detachable connection, or an integral connection; or they can mean a direct connection or an indirect connection through an intermediary. For those of ordinary skill in the art, the specific meanings of the above terms in the embodiments of the present application can be understood according to specific situations.

At present, electrochemical apparatuses are widely used in fields such as portable electronic devices, electric vehicles, electric tools, drones, and energy storage devices. In order to meet the long-endurance needs of electric devices, the requirements for the energy density of electrochemical apparatuses are getting increasingly high. To further increase the energy density, measures such as increasing the coating weight of active materials on the current collector per unit area or using high-specific-capacity active materials (for example, for lithium-ion batteries, silicon-based materials) are usually adopted. However, the inventors of the present application have found through research that for such electrochemical apparatuses, the expansion of the electrode sheets significantly increases during the charge-discharge cycling process, thereby causing the electrode assembly to squeeze the corners of the housing, increasing the risk of damage to the corners of the housing. At the same time, when the housing expands, the corners of the housing are subjected to inward tensile forces, and under the squeezing of the electrode assembly, the risk of damage to the corners of the housing is further increased, thereby affecting the reliability of the electrochemical apparatus during use.

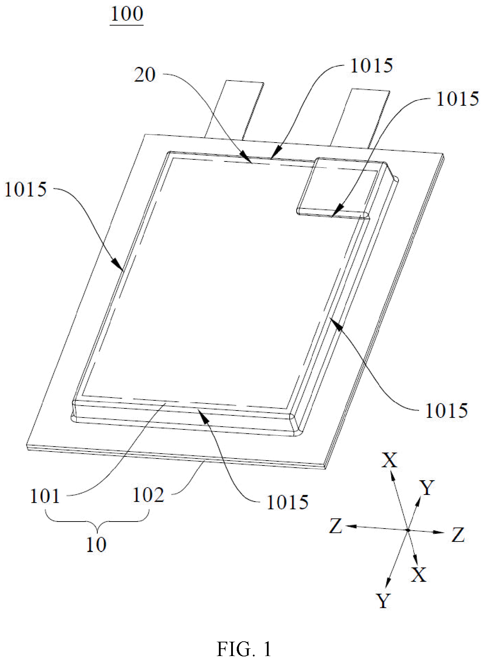

In view of this, referring to FIG. 1, FIG. 2, and FIG. 3, the present application provides an electrochemical apparatus 100, where the electrochemical apparatus 100 includes an electrode assembly 20 and a housing 10, the housing 10 includes a first side wall 101 and a second side wall 102 oppositely disposed along a first direction X, the first direction X is a thickness direction of the electrode assembly 20, and the electrode assembly 20 is disposed between the first side wall 101 and the second side wall 102. The first side wall 101 includes a first outer surface 1011 and a first inner surface 1012, the first outer surface 1011 is away from the electrode assembly 20 relative to the first inner surface 1012, the first outer surface 1011 has a first protrusion 10111, a position of the first inner surface 1012 opposite to the first protrusion 10111 has a first recess 10121, an orthographic projection of the first protrusion 10111 on a first plane 200 is located in a first corner region of an orthographic projection of the first side wall 101 on the first plane 200, and the first plane 200 is perpendicular to the first direction X. In the electrochemical apparatus 100 of the present application, by providing a protrusion in the corner region of the first side wall 101 of the housing 10, it is less likely to hit the corner of the housing 10 during the expansion process of the electrode assembly 20. At the same time, due to a height difference between the inner surface of the corner region of the first side wall 101 and the inner surface of the main body region, when the electrode assembly 20 expands, it preferentially contacts the main body region of the first side wall 101, so that the tensile force generated by the expansion of the electrode assembly 20 mainly acts on the edge 1015 of the main body region, thereby alleviating the pulling on the corner of the housing 10, reducing the risk of damage to the corner of the housing 10, and improving the reliability of the electrochemical apparatus 100 during use.

In some embodiments, the electrode assembly 20 includes a tab 201 and an electrode sheet assembly 202, the electrode sheet assembly 202 is accommodated in an accommodation cavity of the housing 10, one end of the tab 201 is electrically connected to the electrode sheet assembly 202, and the other end of the tab 201 extends out of the housing 10. The electrode sheet assembly 202 generally includes a positive electrode sheet, a separator, and a negative electrode sheet, and the separator is disposed between the positive electrode sheet and the negative electrode sheet. In some embodiments, the positive electrode sheet includes a positive electrode current collector and a positive electrode active substance layer, the positive electrode active substance layer is applied to a surface of the positive electrode current collector, the tab 201 includes a positive electrode tab, and the positive electrode tab is connected to the positive electrode current collector. The negative electrode sheet includes a negative electrode current collector and a negative electrode active substance layer, and the negative electrode active substance layer is applied to a surface of the negative electrode current collector. The tab 201 includes a negative electrode tab, and the negative electrode tab is connected to the negative electrode current collector. Taking a lithium-ion battery as an example, the positive electrode current collector may be aluminum foil, and the positive electrode active substance may include at least one of lithium cobalt oxide, lithium iron phosphate, lithium manganese iron phosphate, ternary lithium, or lithium manganate. The negative electrode current collector may be copper foil, and the negative electrode active substance may include at least one of carbon materials or silicon-based materials. In some embodiments, the tab 201 may be integrally formed with the current collector. In some other embodiments, the tab 201 may be separately processed and formed from the electrode sheet, and the tab 201 is electrically connected to the current collector of the electrode sheet by riveting or welding. In some embodiments, the structure of the electrode assembly 20 may include, but is not limited to, wound type structure or stacked type structure.

In the following, outer refers to the side away from the accommodation cavity, and inner refers to the side facing the accommodation cavity.

The material of the housing 10 may be aluminum-plastic film, steel shell, aluminum shell, and the like, and the present application does not specifically limit it. The housing 10 generally includes multiple wall portions, and the multiple wall portions collectively define an accommodation cavity. In some embodiments, the housing 10 may include a first portion and a second portion, and the first portion and the second portion are packaged together to form the accommodation cavity. One of the first portion and the second portion may have an opening, or both may have an opening. The structure of the first portion may be the same as or different from the structure of the second portion. For example, a groove may be provided in the first portion, the opening of the groove is open, and the electrode assembly 20 may be assembled into the groove through the opening. The second portion may be in a flat plate shape, and the second portion closes the opening to form a closed accommodation cavity. For example, grooves may also be provided in both the first portion and the second portion, and the two grooves are oppositely fastened and packaged in the first portion and the second portion. After completion, the two grooves collectively define a closed accommodation cavity.

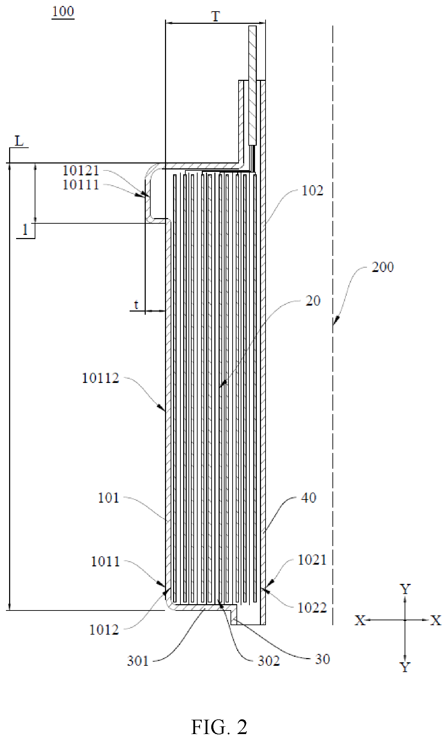

In some embodiments, referring to FIG. 2, a first pit 302 for accommodating the electrode assembly 20 may be provided in the first packaging portion 30, a wall portion of the first pit 302 in the first direction X is the first side wall 101, and the second packaging portion 40 closes the first pit 302 to form the accommodation cavity. The first packaging portion 30 further includes a first peripheral wall 301, the first side wall 101 and the first peripheral wall 301 enclose the first pit 302, and the second packaging portion 40 is in a flat plate shape. The first protrusion 10111 and the first recess 10121 may be processed together while the first pit 302 is formed, so that the processing efficiency is high and the cost is low. The first pit 302 may also be processed first, and then the first protrusion 10111 and the first recess 10121 may be processed. In some other embodiments, the second packaging portion 40 may have a second pit 303 corresponding to the first pit 302.

Depending on the assembly environment of the electrochemical apparatus 100 in the electric device, the shape of the electrochemical apparatus 100 may be rectangular, square, L-shaped, triangular, trapezoidal, T-shaped, or the like.

Referring to FIG. 2, the first plane 200 in the present application is any plane perpendicular to the first direction X, and can be understood as a reference plane rather than referring to the surface of an entity.

The orthographic projection of the first protrusion 10111 on the first plane 200 being located in the first corner region of the orthographic projection of the first side wall 101 on the first plane 200 means that the first protrusion 10111 and the first recess 10121 are located at the corners of the housing 10. The corners of the electrode assembly 20 correspond to the corners of the housing 10. The first corner region can be understood as a region near the intersection of two sides of the orthographic projection of the first side wall 101 on the first plane 200. The corner can generally be understood as a position where at least three wall portions of the housing 10 for defining the accommodation cavity intersect pairwise. The shape of the electrode assembly 20 can be understood as including a reference body with multiple surfaces. Taking the electrode assembly 20 formed by stacking as an example, the electrode assembly 20 may include a top surface and a bottom surface oppositely disposed along the stacking direction of the electrode sheets, and a side surface surrounding the edge of the top surface and connected to the bottom surface, and the corner of the electrode assembly 20 may refer to the corner position of the projection of the top surface of the electrode assembly 20 along its thickness direction. Taking the electrode assembly 20 formed by winding as an example, the electrode assembly 20 may include an outer circumferential surface, and a top surface and a bottom surface opposite along the winding axis direction. Both the top surface and the bottom surface are connected to the edge of the outer circumferential surface. The corner of the electrode assembly 20 may refer to the corner position of the projection of the outer circumferential surface of the electrode assembly 20 along its thickness direction.

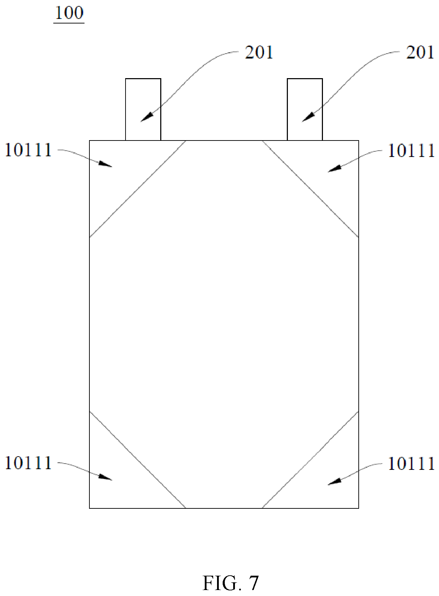

Referring to FIG. 7, FIG. 8 and FIG. 9, in some embodiments, one or more first protrusions 10111 may be provided. In embodiments where multiple first protrusions 10111 are provided, the multiple first protrusions 10111 may be provided at any corner positions of the first side wall 101.

According to some embodiments of the present application, referring to FIG. 1 and FIG. 2, the first outer surface 1011 further has a first base surface 10112, along the first direction X, a height by which the first protrusion 10111 protrudes from the first base surface 10112 is t, the second side wall 102 includes a second outer surface 1021 and a second inner surface 1022, the second outer surface 1021 is away from the electrode assembly 20 relative to the second inner surface 1022, and a distance between the first base surface 10112 and the second outer surface 1021 is T, satisfying: 0.05T ≤ t ≤ 0.4T. The first base surface 10112 refers to the surface of the portion of the first outer surface 1011 where the first protrusion 10111 is not provided. In this way, while improving the reliability of the electrochemical apparatus 100 during use, the electrochemical apparatus 100 can also have a relatively high volumetric energy density. In some embodiments, t may be 0.05T, 0.06T, 0.07T, 0.08T, 0.09T, 0.1T, 0.15T, 0.2T, 0.25T, 0.3T, 0.35T, 0.4T, or in a range composed of any two of these values.

According to some embodiments of the present application, referring to FIG. 1 and FIG. 2, along the second direction Y, the second direction Y is a length direction of the electrode assembly 20, a length of the first protrusion 10111 is l, and a length of the first side wall 101 is L, satisfying: 0.05L ≤ l ≤ 0.4L. The length of the first protrusion 10111 refers to the maximum dimension of the first protrusion 10111 in the second direction Y, and the length of the first side wall 101 refers to the maximum dimension of the first side wall 101 in the second direction Y. In this way, while improving the reliability of the electrochemical apparatus 100 during use, the electrochemical apparatus 100 can also have a relatively high volumetric energy density. In some embodiments, l may be 0.05L, 0.06L, 0.07L, 0.08L, 0.09L, 0.1L, 0.15L, 0.2L, 0.25L, 0.3L, 0.35L, 0.4L, or in a range composed of any two of these values.

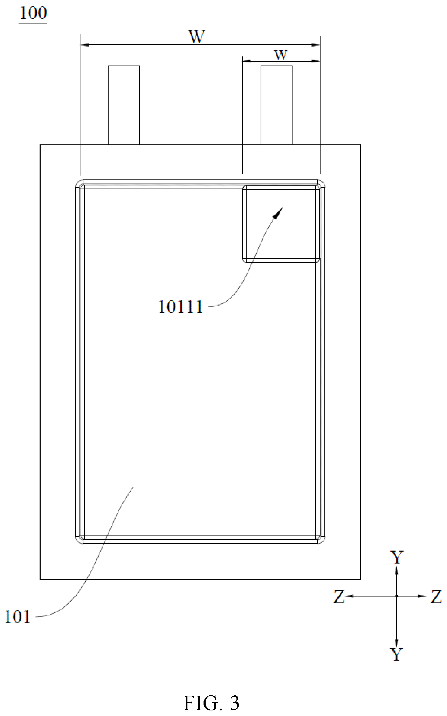

According to some embodiments of the present application, referring to FIG. 1 and FIG. 3, along the third direction Z, the third direction Z is a width direction of the electrode assembly 20, a width of the first protrusion 10111 is w, and a width of the first side wall 101 is W, satisfying: 0.05W ≤ w ≤ 0.4W. The width of the first protrusion 10111 refers to the maximum dimension of the first protrusion 10111 in the third direction Z, and the width of the first side wall 101 refers to the maximum dimension of the first side wall 101 in the third direction Z. In this way, while improving the reliability of the electrochemical apparatus 100 during use, the electrochemical apparatus 100 can also have a relatively high volumetric energy density. In some embodiments, w may be 0.05W, 0.06W, 0.07W, 0.08W, 0.09W, 0.1W, 0.15W, 0.2W, 0.25W, 0.3W, 0.35W, 0.4W, or in a range composed of any two of these values.

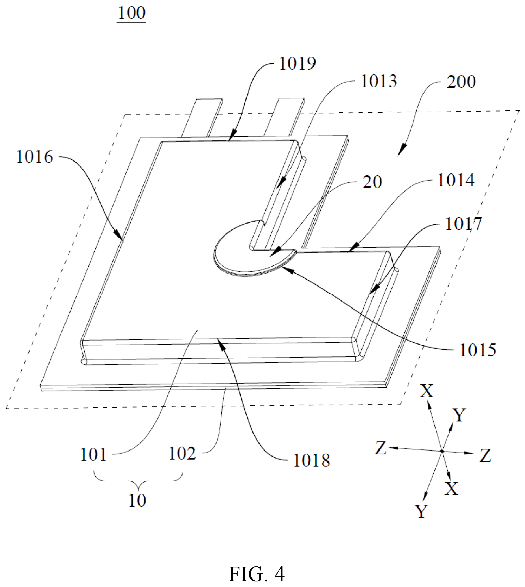

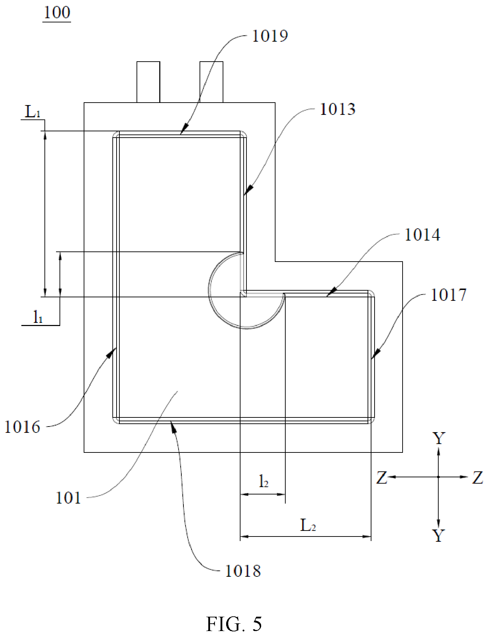

According to some embodiments of the present application, referring to FIG. 4 and FIG. 5, when viewed along the first direction X, the first side wall 101 is L-shaped, and the first corner region is an inner corner region of the orthographic projection of the first side wall 101 on the first plane 200.

The inventors of the present application have found through research that for L-shaped electrochemical apparatuses 100, due to the special structure of their housing 10, the deformation at the inner corners of the housing 10 is more severe during the expansion of the electrode assembly 20, and the risk of corner damage is higher. Referring to FIG. 4, in the electrochemical apparatus 100 where the first side wall 101 is L-shaped, when the electrode assembly 20 expands, the housing 10 expands along the first direction X, causing the first side wall 101 to pull the inner corner of the housing 10. Since the first short side 1013 and the second short side 1014 at the inner corner have shorter lengths and lower structural strength, under the pulling of the first side wall 101, the connection between the first short side 1013 and the second short side 1014 is prone to collapse, thereby making the deformation at the inner corner of the housing 10 more severe. For example, in some embodiments, referring to FIG. 5, the included angle between the first short side 1013 and the second short side 1014 is 90°, and when the electrode assembly 20 expands, the included angle between the first short side 1013 and the second short side 1014 has a tendency to collapse and contract. In other words, compared to the housing 10 with a regular shape, the L-shaped housing 10 has a higher risk of collapse and deformation at the inner corner during the expansion of the electrode assembly 20, thereby making the risk of damage at the inner corner of the L-shaped housing 10 higher than that at other corner positions. In the present application, with the provision of a protrusion in the inner corner region of the first side wall 101, it is less likely for the electrode assembly 20 to squeeze the inner corner of the housing 10 during expansion, and the pulling of the first side wall 101 on the inner corner can be alleviated, thereby better suppressing the collapse at the inner corner, further reducing the risk of damage at the inner corner of the housing 10, and improving the reliability of the electrochemical apparatus 100 during use.

Referring to FIG. 4 and FIG. 5, the L-shaped first side wall 101 has a first long side 1016 and a fourth short side 1017 opposite along the third direction Z, a second long side 1018 and a third short side 1019 opposite along the second direction Y, and a first short side 1013 extending along the second direction Y and a second short side 1014 extending along the third direction Z. The first long side 1016, the second long side 1018, the fourth short side 1017, the second short side 1014, the first short side 1013, and the third short side 1019 are connected end to end. The inner corner region can be understood as a region near the connection position of the first short side 1013 and the second short side 1014 of the orthographic projection of the first side wall 101 on the first plane 200.

The first corner region being the inner corner region of the orthographic projection of the first side wall 101 on the first plane 200 means that the first protrusion 10111 and the first recess 10121 are located at the inner corner of the housing 10.

In some embodiments, an arc-shaped chamfer is provided at the inner corner of the L-shaped housing 10, that is, the first short side 1013 and the second short side 1014 are not directly connected, but are connected through an arc-shaped edge, and the arc-shaped edge is also an edge of the first side wall 101. In this way, the processing and manufacturing of the housing 10 can be facilitated, and the reliability of connection at the inner corner of the housing 10 can also be improved.

According to some embodiments of the present application, the first side wall 101 includes a first short side 1013 extending along the second direction Y and a second short side 1014 extending along the third direction Z, the first short side 1013 and the second short side 1014 are connected to form an inner corner of the first side wall 101, a length of overlap between the first protrusion 10111 and the first short side 1013 is l₁, a length of overlap between the first protrusion 10111 and the second short side 1014 is l₂, a length of the first short side 1013 is L₁, and a length of the second short side 1014 is L₂, satisfying at least one of the following conditions: (1) 0.05L₁ ≤ l₁ ≤ 0.5L₁; or (2) 0.05L₂ ≤ l₂ ≤ 0.5L₂. In this way, while improving the reliability of the electrochemical apparatus 100 during use, the electrochemical apparatus 100 can also have a relatively high volumetric energy density. In some embodiments, l₁ may be 0.05L₁, 0.06L₁, 0.07L₁, 0.08L₁, 0.09L₁, 0.1L₁, 0.15L₁, 0.2L₁, 0.25L₁, 0.3L₁, 0.35L₁, 0.4L₁, 0.45L₁, 0.5L₁, or in a range composed of any two of these values. In some embodiments, l₂ may be 0.05L₂, 0.06L₂, 0.07L₂, 0.08L₂, 0.09L₂, 0.1L₂, 0.15L₂, 0.2L₂, 0.25L₂, 0.3L₂, 0.35L₂, 0.4L₂, 0.45L₂, 0.5L₂, or in a range composed of any two of these values.

According to some embodiments of the present application, referring to FIG. 2, and FIG. 7 to FIG. 9, the first outer surface 1011 is provided with multiple first protrusions 10111, and orthographic projections of the multiple first protrusions 10111 on the first plane 200 are respectively located in multiple first corner regions of the orthographic projection of the first side wall 101 on the first plane 200. In this way, the risk of damage to the corners of the housing 10 caused by the electrode assembly 20 squeezing the housing 10 during expansion can be further reduced, and the reliability of the electrochemical apparatus 100 during use can be improved. The multiple first protrusions 10111 may be provided at diagonal or adjacent corners of the first side wall 101, and a first protrusion 10111 may be provided at each corner position of the first side wall 101.

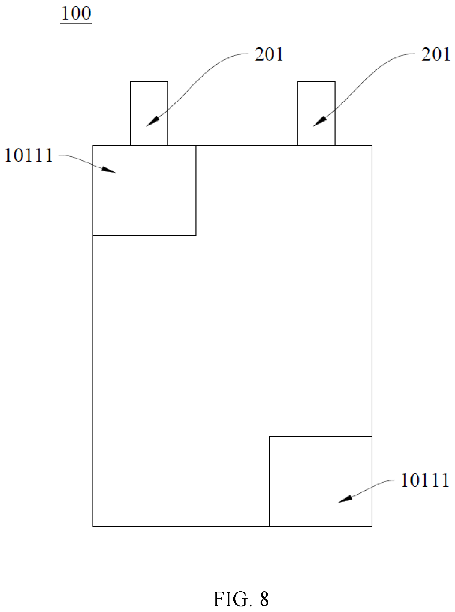

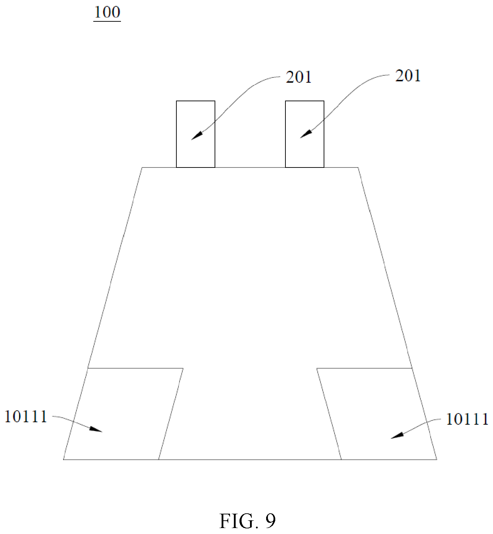

According to some embodiments of the present application, referring to FIG. 4, and FIG. 7 to FIG. 9, when viewed along the first direction X, the first protrusion 10111 is any one of quadrilateral, sector-shaped, L-shaped, or triangular. Referring to FIG. 7, triangular first protrusions 10111 are provided at all four corners of the first side wall 101. Referring to FIG. 8, quadrilateral first protrusions 10111 are provided at a pair of diagonal positions of the first side wall 101. Referring to FIG. 9, rhombus first protrusions 10111 are provided at a pair of adjacent corner positions of the first side wall 101. Referring to FIG. 4, a sector-shaped first protrusion 10111 is provided at the inner corner of the first side wall 101.

In the above solution, when viewed along the first direction X, the first protrusion 10111 is any one of quadrilateral, sector-shaped, L-shaped, or triangular. Such a design allows the electrochemical apparatus 100 to adapt to more electric devices and improves the adaptability of the electrochemical apparatus 100.

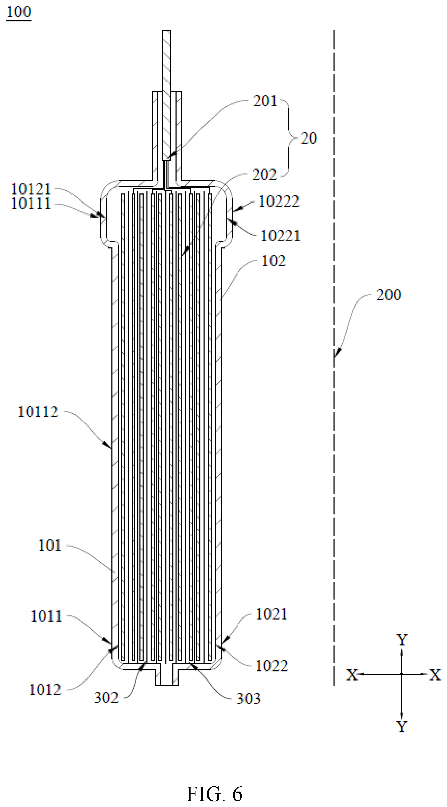

According to some embodiments of the present application, referring to FIG. 6, the second side wall 102 includes a second outer surface 1021 and a second inner surface 1022, the second outer surface 1021 is away from the electrode assembly 20 relative to the second inner surface 1022, the second outer surface 1021 has a second protrusion 10222, a position of the second inner surface 1022 opposite to the second protrusion 10222 has a second recess 10221, and an orthographic projection of the second protrusion 10222 on the first plane 200 is located in a second corner region of an orthographic projection of the second side wall 102 on the first plane 200. In this way, when the electrode assembly 20 expands, the provision of the second protrusion 10222 makes it less likely for the corners of the two side walls of the housing 10 in the first direction X to be squeezed by the electrode assembly 20, further reducing the risk of damage to the corners of the housing 10 and improving the reliability of the electrochemical apparatus 100 during use.

The orthographic projection of the second protrusion 10222 on the first plane 200 may overlap or not overlap with the orthographic projection of the first protrusion 10111 on the first plane 200. In other words, the first protrusion 10111 and the second protrusion 10222 may be at the same corner of the housing 10 or at different corners of the housing 10. One or more second protrusions 10222 may be provided. The second protrusion 10222 and the second recess 10221 may be formed by a single processing step or by two separate processing steps.

Referring to FIG. 6, in embodiments where two grooves collectively define a closed accommodation cavity, the first side wall 101 is a bottom wall of one of the grooves, and the second side wall 102 is a bottom wall of the other groove.

The electrochemical apparatus 100 of the present application includes but is not limited to lithium-ion batteries, sodium-ion batteries, or magnesium-ion batteries. The shape of the electrochemical apparatus 100 of the present application may include but is not limited to rectangular, L-shaped, square, trapezoidal, or other shapes, and the present application does not specifically limit it.

Below, the technical solution of the application is further described in detail by taking a lithium-ion battery as an example.

### Example 1

Preparation of the positive electrode sheet: Lithium cobalt oxide as the positive electrode active material, Super P as the conductive agent, and polyvinylidene fluoride as the binder were mixed in a weight ratio of 97.5:1:1.5, N-methylpyrrolidone (NMP) was added, and the mixture was stirred well under the action of a vacuum mixer to obtain a positive electrode slurry. The positive electrode slurry was uniformly applied to the positive electrode current collector aluminum foil, dried, cold-pressed, cut into sheets, and slit to obtain the positive electrode sheet.

Preparation of the negative electrode sheet: Graphite as the negative electrode active material, sodium carboxymethyl cellulose (CMC) as the thickener, and styrenebutadiene rubber (SBR) as the binder were mixed in a weight ratio of 96:1.5:2.5, deionized water was added, and the mixture was stirred well under the action of a vacuum mixer to obtain a negative electrode slurry. The negative electrode slurry was uniformly applied to the negative electrode current collector copper foil, dried, cold-pressed, cut into sheets, and slit to obtain the negative electrode sheet.

Preparation of the electrolyte: In a dry argon atmosphere glove box, ethylene carbonate (EC), ethyl methyl carbonate (EMC), and diethyl carbonate (DEC) were mixed in a mass ratio of 3:5:2, lithium salt LiPF₆ was added, and the mixture was well mixed to obtain the electrolyte, where the mass concentration of LiPF₆ was 12.5%.

Preparation of the separator: Alumina and polyvinylidene fluoride were mixed well in deionized water in a weight ratio of 95:5 to form a ceramic coating slurry, and polyvinylidene fluoride was dispersed in deionized water and mixed well to form a binder coating slurry. Then, the ceramic coating slurry was uniformly applied to one surface of a polyethylene porous substrate using a micro-concave coating method and dried. The binder coating slurry was applied to the ceramic coating surface and the other side surface of the polyethylene porous substrate by spraying, and after drying, the required separator was obtained.

Preparation of the lithium-ion battery: The positive electrode sheet, separator, and negative electrode sheet were stacked in sequence, with the separator placed between the positive and negative electrode sheets to play a separating role, to obtain a stacked electrode assembly. After the tab 201 is welded, the electrode assembly 20 was placed in a single-sided punched outer aluminum-plastic film packaging, where rectangular first protrusions 10111 and first recesses 10121 were formed at two corner positions of the head portion of the bottom wall of the single-sided punched pit on the side where the tab 201 extended out. After preliminary packaging, the above-prepared electrolyte was injected, and processes such as vacuum packaging, standing, formation, shaping, and capacity testing were performed to obtain a square lithium-ion battery. The length L of the lithium-ion battery was 87 mm, the width W was 64 mm, the thickness T was 4.8 mm, the length l of the first protrusion 10111 was 0.1L, the width w was 0.1W, and the height t was 0.1T.

Examples 2-6: The only difference from Example 1 was that the height t of the first protrusion 10111 was adjusted according to the proportions in Table 1.

Examples 7-16: The only difference from Example 3 was that the length l and width w of the first protrusion 10111 were adjusted according to the proportions in Table 1.

Example 17: The only difference from Example 3 was that the lithium-ion battery was L-shaped, the length L of the first long side 1016 was 76.5 mm, the length W of the second long side 1018 was 54 mm, the length L₁ of the first short side 1013 was 44 mm, the length L₂ of the second short side 1014 was 20 mm, the length of the third short side 1019 was 34 mm, the length of the fourth short side 1017 was 32.5 mm, and the thickness T was 5.1 mm; the sector-shaped first protrusion 10111 and first recess 10121 were provided on the first side wall 101 at the outer corner.

Examples 18-23: The difference from Example 17 was that the first protrusion 10111 and the first recess 10121 were provided on the first side wall 101 at the inner corner and were sector-shaped, where the length l₁ of overlap between the first protrusion 10111 and the first short side 1013 and the length l₂ of overlap between the first protrusion 10111 and the second short side 1014 were as shown in Table 2.

Comparative Example 1: The only difference from Example 1 was that the first protrusion 10111 and the first recess 10121 were not provided.

Comparative Example 2: The only difference from Example 17 was that the first protrusion 10111 and the first recess 10121 were not provided.

Cycling damage test: 10 lithium-ion batteries were taken from each group for testing, and the test temperature was 35°C. The lithium-ion batteries were placed in a constant temperature environment at 35°C and allowed to stand for 60min, such that the lithium-ion batteries reached a constant temperature state. The lithium-ion battery was charged at a constant current of 1C to 4.48V, charged at a constant voltage of 4.48V to a current of 0.05C, left standing for 5min, discharged at a constant current of 3V, and left standing for 5min, which was one charge-discharge cycle. The above charge-discharge cycles were repeated 500 times, and after the cycles, whether the corners of the lithium-ion batteries were damaged or leaked was checked, and the number of lithium-ion batteries with damage or leakage was counted.

The specific parameters and cycling damage test results of the square lithium-ion batteries of Examples 1-16 and Comparative Example 1 are shown in Table 1.

**Table 1: Specific parameters and cycling damage test results of square lithium-ion batteries of Examples 1-16 and Comparative Example 1**

| | Length l of first protrusion | Width w of first protrusion | Height t by which first protrusion protrudes from first base surface | Number of experiments | Number of cycling damages |
|---|---|---|---|---|---|
| Comparative Example 1 | / | / | / | 10 | 4 |
| Example 1 | 0.1L | 0.1W | 0.1T | 10 | 0 |
| Example 2 | 0.1L | 0.1W | 0.05T | 10 | 0 |
| Example 3 | 0.1L | 0.1W | 0.15T | 10 | 0 |
| Example 4 | 0.1L | 0.1W | 0.2T | 10 | 0 |
| Example 5 | 0.1L | 0.1W | 0.3T | 10 | 0 |
| Example 6 | 0.1L | 0.1W | 0.4T | 10 | 0 |
| Example 7 | 0.05L | 0.1W | 0.1T | 10 | 0 |
| Example 8 | 0.15L | 0.1W | 0.1T | 10 | 0 |
| Example 9 | 0.2L | 0.1W | 0.1T | 10 | 0 |
| Example 10 | 0.3L | 0.1W | 0.1T | 10 | 0 |
| Example 11 | 0.4L | 0.1W | 0.1T | 10 | 0 |
| Example 12 | 0.1L | 0.05W | 0.1T | 10 | 0 |
| Example 13 | 0.1L | 0.15W | 0.1T | 10 | 0 |
| Example 14 | 0.1L | 0.2W | 0.1T | 10 | 0 |
| Example 15 | 0.1L | 0.3W | 0.1T | 10 | 0 |
| Example 16 | 0.1L | 0.4W | 0.1T | 10 | 0 |

From the comparison between Examples 1-16 in Table 1 and Comparative Example 1, it can be seen that the lithium-ion batteries of the examples of the present application, by providing the first protrusion 10111 and the first recess 10121 at the corners, can effectively reduce the probability of damage to the corners of the housing 10 during the cycling process of the lithium-ion battery, thereby improving the reliability of the lithium-ion battery during use. At the same time, from Examples 1-16, it can be seen that when the first protrusion 10111 satisfies 0.05T ≤ t ≤ 0.4T, 0.05L ≤ l ≤ 0.4L, and 0.05W ≤ w ≤ 0.4W, while improving the reliability of the lithium-ion battery during use, the lithium-ion battery can also have a higher volumetric energy density.

The specific parameters and cycling damage test results of the L-shaped lithium-ion batteries of Examples 17-23 and Comparative Example 2 are shown in Table 2.

**Table 2: Specific parameters and cycling damage test results of L-shaped lithium-ion batteries of Examples 17-23 and Comparative Example 2**

| | Position of first protrusion | Length l of first protrusio n | Width w of first protrusio n | Length l₁ of overlap between first protrusi on and first short side | Length l₂ of overlap between first protrusion and second short side | Height t by which first protrusio n protrudes from first base surface | Number of experime nts | Numbe r of inner corner damag es during cycling | Numb er of outer corner damag es during cyclin g |
|---|---|---|---|---|---|---|---|---|---|
| Comparat ive Example 2 | / | / | / | / | / | / | 10 | 3 | 1 |
| Example 17 | Outer corner | 0.1L | 0.1W | / | / | 0.05T | 10 | 2 | 0 |
| Example 18 | Inner corner | / | / | 0.1 L₂ | 0.1 L₂ | 0.05T | 10 | 0 | 0 |
| Example 19 | Inner corner | / | / | 0.15 L₂ | 0.15 L₂ | 0.05T | 10 | 0 | 0 |
| Example 20 | Inner corner | / | / | 0.2 L₂ | 0.2 L₂ | 0.05T | 10 | 0 | 0 |
| Example 21 | Inner corner | / | / | 0.3 L₂ | 0.3 L₂ | 0.05T | 10 | 0 | 0 |
| Example 22 | Inner corner | / | / | 0.4 L₂ | 0.4 L₂ | 0.05T | 10 | 0 | 0 |
| Example 23 | Inner corner | / | / | 0.5 L₂ | 0.5 L₂ | 0.05T | 10 | 0 | 0 |

From the comparison between Example 17 in Table 2 and Comparative Example 2, it can be seen that by providing the first protrusion 10111 and the first recess 10121 at the outer corner, the probability of damage to the inner corner of the housing 10 during the cycling process of the lithium-ion battery can be effectively reduced, thereby improving the reliability of the lithium-ion battery during use. Further, from the comparison between Examples 18-22 and Example 17, it can be seen that by providing the first protrusion 10111 and the first recess 10121 on the first side wall 101 at the inner corner, the probability of damage to the inner corner of the housing 10 during the cycling process of the lithium-ion battery can be further significantly reduced, thereby further improving the reliability of the lithium-ion battery during use.

Some embodiments of the present application also provide an electric device, including the electrochemical apparatus 100 provided in any one or more of the above embodiments. Since the electrochemical apparatus 100 provided in these embodiments of the first aspect has a relatively low risk of damage to the corners of the housing 10 during use, the electric device including the above electrochemical apparatus 100 has relatively high reliability during use.

The electric device of the present application includes, but is not limited to: portable electronic devices, electric vehicles, electric tools, drones, energy storage devices, and VR/AR devices.

Finally, it should be noted that the above embodiments are only used to illustrate the technical solutions of the present application and are not intended to limit them. Although the present application has been described in detail with reference to the foregoing embodiments, those of ordinary skill in the art should understand that modifications can still be made to the technical solutions recorded in the foregoing embodiments, or equivalent replacements can be made to some or all of the technical features therein. These modifications or replacements do not make the essence of the corresponding technical solutions depart from the scope of the technical solutions of some embodiments of the present application, and they should all be covered within the scope of the claims and specification of the present application. In particular, as long as there is no structural conflict, the various technical features mentioned in the various embodiments can be combined in any manner.

## Claims

1. An electrochemical apparatus, **characterized in that**, comprising:
an electrode assembly;
a housing, comprising a first side wall and a second side wall oppositely disposed along a first direction, wherein the first direction is a thickness direction of the electrode assembly, and the electrode assembly is disposed between the first side wall and the second side wall;
wherein the first side wall comprises a first outer surface and a first inner surface, the first outer surface is away from the electrode assembly relative to the first inner surface, the first outer surface has a first protrusion, a position of the first inner surface opposite to the first protrusion has a first recess, an orthographic projection of the first protrusion on a first plane is located in a first corner region of an orthographic projection of the first side wall on the first plane, and the first plane is perpendicular to the first direction.

2. The electrochemical apparatus according to claim 1, **characterized in that**, the first outer surface further has a first base surface, along the first direction, a height by which the first protrusion protrudes from the first base surface is t, the second side wall comprises a second outer surface and a second inner surface, the second outer surface is away from the electrode assembly relative to the second inner surface, and a distance between the first base surface and the second outer surface is T, satisfying: 0.05T ≤ t ≤ 0.4T.

3. The electrochemical apparatus according to claim 1, **characterized in that**, along a second direction, the second direction is a length direction of the electrode assembly, a length of the first protrusion is l, and a length of the first side wall is L, satisfying: 0.05L ≤ l ≤ 0.4L.

4. The electrochemical apparatus according to claim 1, **characterized in that**, along a third direction, the third direction is a width direction of the electrode assembly, a width of the first protrusion is w, and a width of the first side wall is W, satisfying: 0.05W ≤ w ≤ 0.4W.

5. The electrochemical apparatus according to claim 1, **characterized in that**, when viewed along the first direction, the first side wall is L-shaped, and the first corner region is an inner corner region of the orthographic projection of the first side wall on the first plane.

6. The electrochemical apparatus according to claim 5, **characterized in that**, the first side wall comprises a first short side extending along a second direction and a second short side extending along a third direction, the first short side and the second short side are connected to form an inner corner of the first side wall, a length of overlap between the first protrusion and the first short side is l₁, a length of overlap between the first protrusion and the second short side is l₂, a length of the first short side is L₁, and a length of the second short side is L₂, satisfying at least one of the following conditions:$0.05 {L}_{1} \leq {I}_{1} \leq 0.5 {L}_{1} ;$ (1) or $0.05 {L}_{2} \leq {I}_{2} \leq 0.5 {L}_{2} .$ (2)

7. The electrochemical apparatus according to any one of claims 1 to 4, **characterized in that**, the first outer surface is provided with multiple first protrusions, and orthographic projections of the multiple first protrusions on the first plane are respectively located in multiple first corner regions of the orthographic projection of the first side wall on the first plane.

8. The electrochemical apparatus according to any one of claims 1 to 6, **characterized in that**, when viewed along the first direction, the first protrusion is any one of quadrilateral, sector-shaped, L-shaped, or triangular.

9. The electrochemical apparatus according to any one of claims 1 to 6, **characterized in that**, the second side wall comprises a second outer surface and a second inner surface, the second outer surface is away from the electrode assembly relative to the second inner surface, the second outer surface has a second protrusion, a position of the second inner surface opposite to the second protrusion has a second recess , and an orthographic projection of the second protrusion on the first plane is located in a second corner region of an orthographic projection of the second side wall on the first plane.

10. An electric device, **characterized in that**, comprising the electrochemical apparatus according to any one of claims 1 to 9.
